# EUROPÄISCHE PATENTSCHRIFT

(11) **EP 2 930 388 B1**
(45) Veröffentlichungstag und Bekanntmachung des Hinweises auf die Patenterteilung: **02.10.2019**
(21) Anmeldenummer: 15156639.5
(22) Anmeldetag: 26.02.2015
(51) Int. Cl.: F16D 25/12, F16D 13/72, F16D 48/02

(54) **KUPPLUNGSANORDNUNG UND VERFAHREN ZU DEREN BETÄTIGUNG**
COUPLING ASSEMBLY AND METHOD FOR ACTUATING THE SAME
AGENCEMENT D'EMBRAYAGE ET SON PROCÉDÉ D'ACTIONNEMENT

(30) Priorität: 11.04.2014 DE 102014105160
(43) Veröffentlichungstag der Anmeldung: 14.10.2015
(73) Patentinhaber: Magna PT B.V. & Co. KG, 74199 Untergruppenbach (DE)
(72) Erfinder: Pawlenka, Andreas, 74613 Öhringen (DE); Seufert, Martin, 71711 Steinheim (DE); Heyer, Jens, 98528 Suhl (DE); Rühle, Günter, 74369 Löchgau (DE); Weidner, Markus, 71540 Murrhardt (DE)
(74) Vertreter: Rausch, Gabriele

(56) Entgegenhaltungen:
- EP-A2- 1 903 238
- DE-A1- 10 143 833
- DE-A1- 10 150 598
- DE-A1-102011 113 278
- DE-A1-102011 118 574
- US-A1- 2004 159 523
- US-A1- 2011 214 959
- US-B2- 8 037 990

## Beschreibung

Die vorliegende Erfindung betrifft eine Kupplungsanordnung, insbesondere für ein manuelles oder ein automatisiertes Kraftfahrzeug-Stufengetriebe, mit einer nasslaufenden Reibkupplung zur Anordnung zwischen einem Antriebsmotor und einem Stufengetriebe, mit einem Fluidaktuator zur Betätigung der Reibkupplung, mit einer Kühleinrichtung zur Fluidkühlung der Reibkupplung und mit einer Fluidversorgungseinrichtung, die einen Elektromotor und eine von dem Elektromotor angetriebene Pumpenanordnung aufweist, wobei die Pumpenanordnung über einen ersten Zweig mit dem Fluidaktuator verbunden ist und über einen zweiten Zweig mit der Kühleinrichtung verbunden ist.

Ferner betrifft die vorliegende Erfindung einen Antriebsstrang mit einem Antriebsmotor, mit einer Kupplungsanordnung, die eine einzelne Reibkupplung mit einem Eingangsglied aufweist, das mit dem Antriebsmotor verbunden ist, und mit einem Stufengetriebe, dessen Eingang mit einem Ausgangsglied der Reibkupplung verbunden ist.

Schließlich betrifft die vorliegende Erfindung ein Verfahren zur Betätigung und zur Kühlung einer Kupplungsanordnung, insbesondere einer Kupplungsanordnung der oben beschriebenen Art.

Auf dem Gebiet der Antriebsstränge für Kraftfahrzeuge dienen Reibkupplungen als Trenn- bzw. Anfahrkupplungen zwischen Antriebsmotor und einem Stufengetriebe. Der Antriebsmotor kann beispielsweise ein Verbrennungsmotor sein, kann jedoch auch eine Hybrid-Antriebseinheit sein. Das Stufengetriebe ist gewöhnlich ein Getriebe in Vorgelegebauweise mit einer Mehrzahl von Gangstufen, die über jeweilige Schaltkupplungen (Synchroneinheiten) ein- und auslegbar sind.

Bei manuell betätigten Antriebssträngen dieser Art werden die Schaltkupplungen über einen Gangschalthebel im Fahrzeuginnenraum betätigt. Die Kupplung wird über ein Kupplungspedal betätigt. Die bislang zu diesem Zweck verwendeten Kupplungen sind trockene Reibkupplungen, die durch Federvorspannung normalerweise geschlossen sind, also durch Betätigung des Kupplungspedals in einen Schleifzustand gebracht und geöffnet werden können.

Es ist auf dem Gebiet solcher Antriebsstränge ferner bekannt, die Getriebebetätigung und/oder die Kupplungsbetätigung zu automatisieren, wozu Aktuatoren wie beispielsweise Hydraulikaktuatoren verwendet werden.

Beispielsweise ist es aus dem Dokument WO 2006/128 637 A1 bekannt, eine Reibkupplung in Form einer Lamellenkupplung mittels eines Stufenkolbens zu betätigen, um einen Vorhub bis zum Erreichen eines Anliegens der Kupplung (Schleifpunkt) schnell durchfahren zu können.

Ferner offenbart das Dokument DE 10 2012 002 162 A1 einen Fluidzylinder zur Betätigung einer Reibkupplung, wobei der Zylinder in eine Öffnungsrichtung der Reibkupplung vorgespannt ist (normally open) und wobei ein Druckanschluss einer elektromotorisch angetriebenen Pumpe direkt mit einem Betätigungsanschluss des einfach wirkenden Fluidzylinders verbunden ist. Die Pumpe kann dabei bidirektional antreibbar sein, wobei der Kolben mit einer Abdichteinrichtung verbunden sein kann, um den Fluidzylinder gegen einen Unterdruck abzudichten, wenn die Pumpe zum Abpumpen von Fluid aus dem Fluidraum verwendet wird. Zur Betätigung der Pumpenanordnung wird der Druck in dem Fluidzylinder durch Verändern der Drehzahl des Elektromotors eingestellt. Ein derartiger "Pumpenaktuator" kann mit wenigen Bauteilen realisiert werden.

Bei derartigen Pumpenaktuatoren ist es in der Regel auch nicht nötig, Druckspeicher im Hydraulikkreis vorzusehen, wie es beispielsweise aus dem Dokument DE 10 2009 005 410 B4 bekannt ist.

Das Dokument DE 10 2004 033 439 C5 offenbart eine weitere Form von Pumpenaktuator, wobei ein Motor zwei Pumpen antreibt, von denen eine für ein schnelles Schließen der Reibkupplung bei geringem Kraftaufwand ausgelegt ist und wobei die zweite Pumpe für eine Betätigung der Reibkupplung mit einer großen Kraft bei einem geringen Hub ausgelegt ist.

Sofern die in einem solchen Antriebsstrang verwendete Reibkupplung eine nasslaufende Kupplung ist, ist es auch bekannt, diese zu kühlen. Das Dokument DE 10 2011 118 574 A1 offenbart beispielsweise eine Antriebsstrang-Kühlanordnung mit einem ersten Kühlkreis zur Kühlung einer Doppelkupplungsanordnung für ein Doppelkupplungsgetriebe und mit einem zweiten Kühlkreis zur Kühlung beispielsweise einer elektrischen Maschine und/oder eines Stufengetriebes. Die Kühlkreise sind dabei an unterschiedliche Pumpenanschlüsse einer einzelnen Pumpe angeschlossen, die mittels eines Elektromotors bidirektional antreibbar ist. Der Kühlmittel-Volumenstrom ist durch Verändern der Drehzahl des Pumpen-Elektromotors einstellbar.

Schließlich ist aus dem Dokument DE 10 2011 102 277 A1 eine Kupplungsordnung für ein Kraftfahrzeug bekannt, die zwei Reibkupplungen aufweist, die mittels jeweiliger Aktuatoren betätigt werden. Zu deren Betätigung ist eine bidirektional mittels eines Elektromotors antreibbare Pumpe vorgesehen, die je nach Drehrichtung entweder die eine oder die andere Kupplung betätigt. Aus diesem Dokument ist es auch bekannt, bei Erreichen eines bestimmten Druckes von dem Volumenstrom zur Betätigung der Reibkupplung einen Kühl-Volumenstrom abzuzweigen, der über eine Blende begrenzt sein kann. Eine derartige Fluidversorgungseinrichtung für die Betätigungszylinder einerseits und die Kühleinrichtung andererseits kann jedoch die in einem Antriebsstrang vorkommenden Zustände nicht immer optimal abbilden. Sofern hingegen für die Betätigung einerseits und die Kühlung andererseits unterschiedliche Aktuatoren bzw. Fluidversorgungseinrichtungen verwendet werden, ergibt sich ein erhöhter Aufwand. Dies gilt insbesondere im Vergleich zu trockenen Reibkupplungen, bei denen eine Fluidkühlung nicht vorgesehen ist.

Aus der DE 10143833 A1 ist ein Kupplungssystem bekannt, umfassend wenigstens eine Kupplungseinrichtung insbesondere für die Anordnung in einem Kraftfahrzeug-Antriebsstrang zwischen einer Antriebseinheit und einem Getriebe, wobei die Kupplungseinrichtung wenigstens eine unter Vermittlung von Druckmedium betätigbare, für einen Betrieb unter Einwirkung eines Betriebsmediums vorgesehene Kupplungsanordnung aufweist, wobei das Druckmedium für die Betätigung bereitstellbar ist auf Grundlage einer ersten Pumpenanordnung und wobei der Kupplungseinrichtung für den Betrieb unter Einwirkung des Betriebsmediums auf Grundlage einer zweiten Pumpenanordnung Betriebsmedium zuführbar ist.

US 8,037,990 B2 zeigt eine Kupplungsanordnung mit einer nasslaufenden Reibkupplung wobei eine Aktuatorik für die Kupplung sowie eine Kühleinrichtung für die Kupplung über ein Regelventil mit Fluid versorgt wird.

Aus der DE 10143833 A1 ist ein Kupplungssystem bekannt, in dem zwei Pumpen als Kühlpumpe und als Betätigungspumpe für das Kupplungssystem verwendet werden.

DE 10150598 A1 zeigt ein Schaltventil, das als 3/2 Wege-Schaltventil im Kühlkreislauf aufgebaut ist.

Es ist vor diesem Hintergrund eine Aufgabe der Erfindung, eine verbesserte Kupplungsanordnung, einen verbesserten Antriebsstrang sowie ein verbessertes Verfahren zum Betätigen einer Kupplungsanordnung anzugeben, wobei der Bauteilaufwand möglichst gering sein soll, so dass sich Kosten-, Package- und/oder Gewichtsvorteile ergeben können, und/oder wobei unterschiedliche Zustände effektiver abgebildet werden können, insbesondere hinsichtlich des Wirkungsgrades.

Die obige Aufgabe wird bei der eingangs genannten Kupplungsanordnung durch eine Umschaltanordnung gelöst, die dazu ansteuerbar ist, um einen Fluidvolumenstrom von der Pumpenanordnung zu der Kühleinrichtung zu reduzieren, wenn ein Betätigungsdruck in dem ersten Zweig einen Schwellendruck überschreitet und/oder der Fluidaktuator einen Schwellenweg überschreitet. Ferner wird die obige Aufgabe gelöst durch einen Antriebsstrang mit einer derartigen Kupplungsanordnung.

Schließlich wird die obige Aufgabe gelöst durch ein Verfahren zur Betätigung und zur Kühlung einer Kupplungsanordnung, insbesondere der erfindungsgemäßen Art, wobei die Kupplungsanordnung eine nasslaufende Reibkupplung sowie eine Fluidversorgungseinrichtung aufweist, die über einen ersten Zweig mit einem Fluidaktuator zur Betätigung der Reibkupplung verbunden ist und die über einen zweiten Zweig mit einer Kühleinrichtung zur Fluidkühlung der Reibkupplung verbunden ist, wobei die Fluidversorgungseinrichtung dazu ausgebildet ist, in dem ersten Zweig einen geregelten Betätigungsdruck für den Fluidaktuator einzustellen, wobei das Verfahren den Schritt beinhaltet, einen Fluidvolumenstrom von der Fluidversorgungseinrichtung zu der Kühleinrichtung zu reduzieren, wenn der Betätigungsdruck in dem ersten Zweig einen Schwellendruck überschreitet und/oder der Fluidaktuator einen Schwellenweg überschreitet.

Die Kupplungsanordnung kann mit wenigen Bauteilen realisiert werden, insbesondere nur einem Elektromotor und einer Pumpenanordnung, die von dem Elektromotor angetrieben ist. Hierdurch ergeben sich erhebliche Vorteile hinsichtlich Kosten, Package und/oder Gewicht. Insbesondere ist kein zweiter Elektromotor vorzusehen, der beispielsweise unabhängig von der Betätigung der Kupplung für die Kühlung sorgt.

Durch die Umschaltanordnung ist zudem das Problem gelöst, dass ein Betätigungsdruck und Kühlvolumenstrom im Stand der Technik zwangsweise miteinander korrelieren. Dann, wenn der Betätigungsdruck groß ist, ist die Reibkupplung beispielsweise vollständig geschlossen oder vollständig geöffnet (je nachdem, ob die Reibkupplung normally open oder normally closed ist). In diesen Fällen wird jedoch in der Regel keine hohe Kühlleistung benötigt, da die Kühlleistung hauptsächlich dann benötigt wird, wenn die Reibkupplung sich in einem Schleifzustand befindet. Durch das Bereitstellen eines hohen Kühlvolumenstromes bei einem hohen Betätigungsdruck können jedoch Schleppverluste erzeugt werden, die den Wirkungsgrad und/oder den Komfort des Antriebsstranges verringern.

Beispielsweise können die Schleppverluste dazu führen, dass sich Schaltkupplungen schwieriger einlegen lassen. Dies ist insbesondere dann problematisch, wenn zwar die Kupplung automatisiert mittels des Fluidaktuators betätigt wird, die Gangstufen in dem Stufengetriebe jedoch manuell betätigt werden.

Durch die Umschaltanordnung der Kupplungsanordnung ist es nun möglich, den Fluidvolumenstrom zu der Kühleinrichtung zu reduzieren, wenn der Betätigungsdruck einen Schwellendruck überschreitet und/oder der Fluidaktuator einen Schwellenweg überschreitet.

Folglich können Schleppverluste insbesondere bei hohen Betätigungsdrücken bzw. vollem Betätigungsweg des Fluidaktuators verringert werden.

Die Aufgabe wird somit vollkommen gelöst.

Gemäß einer besonders bevorzugten Ausführungsform ist die Reibkupplung in eine geschlossene Position vorgespannt.

Eine derartige Reibkupplungsform vom "Normally closed"-Typ ist in solchen Fällen vorteilhaft, wenn der Antriebsstrang eine einzelne Reibkupplung aufweist und/oder die Schaltkupplungen zur Gangbetätigung des Getriebes manuell betätigt werden.

Durch die normalerweise geschlossene Position kann hierbei ein hoher Wirkungsgrad erreicht werden, da der Fluidaktuator nur dann einzusetzen ist, wenn die Kupplung geöffnet wird, beispielsweise bei Gangwechsel und/oder im Stand vor einem Anfahrvorgang oder dergleichen.

Gemäß der Erfindung ist der Schwellendruck größer als ein Schleifpunkt-Betätigungsdruck, bei dem die Reibkupplung ihren Schleifpunkt ("Kisspoint") hat. Hierdurch kann gewährleistet werden, dass der Fluidvolumenstrom zur Kühlung der Reibkupplung nicht reduziert ist, wenn sich die Reibkupplung in dem Schleifzustand befindet. Vielmehr wird der Volumenstrom, der der Kühleinrichtung bereitgestellt wird, erst dann reduziert, wenn die Kupplung beispielsweise vollständig geöffnet ist (bei einer Normally closed-Kupplung). In diesem Fall können die Schleppverluste effizient vermieden werden, da der Kupplungsvolumenstrom reduziert ist, wenn die Kupplung geöffnet ist und während dieser Phase Gangwechsel durchgeführt werden, da Synchronisierungsvorgänge aufgrund der verringerten Schleppverluste hierdurch erleichtert werden können.

Ferner ist die Pumpenanordnung durch eine einzelne Pumpe gebildet, die einen ersten Pumpenanschluss aufweist, der über den ersten Zweig direkt mit dem Fluidaktuator verbunden ist. Die direkte Verbindung der Pumpenanordnung über den ersten Zweig mit dem Fluidaktuator bedeutet vorzugsweise, dass in dem ersten Zweig keine Proportional- oder Servoventile zur Druckregelung bereitgestellt werden müssen. Denn diese führen bei der Montage derartiger Kupplungsanordnungen zu erhöhten Reinheitsanforderungen. Vorliegend kann der Betätigungsdruck für die Reibkupplung über das Einstellen der Drehzahl des Elektromotors geregelt werden.

Bei dieser Ausführungsform kann die einzelne Pumpe nach der Art eines Pumpenaktuators angetrieben werden, indem der Betätigungsdruck durch Einstellen der Drehzahl des Elektromotors geregelt wird.

In dem zweiten Zweig ist der von der Pumpenanordnung bereitgestellte Volumenstrom zur Kühlung direkt zu einem Kühlanschluss der Reibkupplung geführt.

In einer Variante kann in dem zweiten Zweig auch eine Strahlpumpe derart angeordnet werden, dass der von der Pumpenanordnung bereitgestellte Volumenstrom mit einem Treibanschluss einer solchen Saugstrahlpumpe verbunden wird. Der Sauganschluss einer solchen Saugstrahlpumpe kann in diesem Fall mit einem Tank bzw. einem Reservoir verbunden werden. Hierdurch kann der Volumenstrom, der zur Kühlung bereitgestellt wird, gegenüber dem von der Pumpenanordnung bereitgestellten Volumenstrom signifikant erhöht werden. Derartige Saugstrahlpumpen sind vergleichsweise kostengünstig realisierbar und weisen in der Regel keine beweglichen Bauteile auf, so dass sie ebenfalls bei relativ geringen Reinheitsanforderungen hergestellt werden können.

Ferner, ist der zweite Zweig mit dem ersten Pumpenanschluss verbunden.

Bei dieser Ausführungsform liefert die Pumpe einen Volumenstrom an den ersten Pumpenanschluss, der dann bedarfsweise zur Betätigung der Reibkupplung und zur Kühlung der Reibkupplung aufgeteilt wird.

In einer weiteren bevorzugten Ausführungsform ist ein zweiter Pumpenanschluss der Pumpe mit der Kühleinrichtung verbunden.

Bei dieser Ausführungsform kann eine Kühlung der Reibkupplung auch dann erfolgen, wenn die Reibkupplung nicht betätigt wird.

Ferner weist die Pumpenanordnung eine Betätigungspumpe und eine Kühlpumpe auf, wobei ein Pumpenanschluss der Betätigungspumpe über den ersten Zweig mit dem Fluidaktuator verbunden ist und wobei ein Pumpenanschluss der Kühlpumpe über dem zweiten Zweig mit einem Kühlanschluss der Reibkupplung verbunden ist.

Bei dieser Ausführungsform können für das Betätigen der Reibkupplung und für das Kühlen der Reibkupplung unterschiedliche Pumpen verwendet werden, beispielsweise eine Volumenpumpe für die Kühlpumpe und eine Druckpumpe für die Betätigungspumpe.

Es versteht sich bei dieser Ausführungsform jedoch, dass die Betätigungspumpe und die Kühlpumpe gemeinsam von dem Elektromotor angetrieben werden. Allerdings ist es in manchen Ausführungsformen auch denkbar, den Elektromotor über unterschiedliche Übersetzungen mit den beiden Pumpen zu verbinden, um gegebenenfalls unterschiedliche Pumpencharakteristika zu realisieren.

Generell ist es hierbei denkbar, dass die Betätigungspumpe und die Kühlpumpe jeweils unidirektional arbeiten, wobei deren jeweilige zweite Pumpenanschlüsse jeweils als reine Sauganschlüsse ausgebildet sind.

In einer alternativen bevorzugten Ausführungsform sind die Betätigungspumpe und die Kühlpumpe bidirektional antreibbar, wobei ein erster und ein zweiter Pumpenanschluss der Kühlpumpe mit dem zweiten Zweig über eine Rückschlagventilanordnung verbunden sind, die so ausgebildet ist, dass in beiden Drehrichtungen der Kühlpumpe Fluid in den zweiten Zweig geleitet wird.

Ein bidirektionales Antreiben der Betätigungspumpe hat den Vorteil, dass Fluid aus dem Fluidaktuator gegebenenfalls schneller wieder abgesaugt werden kann, das Fluid also nicht allein durch eine Vorspannfeder herausgedrückt werden muss. Dies kann das Ansprechverhalten und die Regelbarkeit verbessern.

Für die Kühlpumpe ist hingegen vorgesehen, dass die Rückschlagventilanordnung dafür sorgt, dass die Kühlpumpe unabhängig von der Drehrichtung einen Volumenstrom zum Kühlen der Kühleinrichtung bereitstellen kann.

Generell ist es denkbar, die Umschaltanordnung auf verschiedene Art und Weise zu realisieren, beispielsweise durch Einflussnahme auf die Kopplung zwischen Elektromotor und Pumpenanordnung.

Gemäss der Erfindung weist die Umschaltanordnung eine Ventilanordnung auf, die in dem zweiten Zweig angeordnet ist und die zur Ventilbetätigung in Abhängigkeit von einem Betätigungsdruck mit dem ersten Zweig der Fluidversorgungseinrichtung verbunden ist.

Mit einer derartigen Ventilanordnung, die über den Betätigungsdruck druckgesteuert ist, beispielsweise gegen eine Vorspannfeder, kann der Schwellendruck auf konstruktiv einfache Weise eingestellt werden. Die Ventilanordnung sorgte beispielsweise in einer Ventilstellung für einen ungehinderten Durchfluss zwischen Pumpenanordnung und Kühlanschluss und sorgt in einer zweiten Ventilstellung beispielsweise für einen reduzierten Volumenstrom hin zu dem Kühlanschluss. Der reduzierte Volumenstrom kann bis auf Null reduziert sein. In letzterem Fall kann der von der Pumpenanordnung in dem zweiten Zweig bereitgestellte Volumenstrom beispielsweise in einen Tank geleitet werden. Alternativ kann der Kühlvolumenstrom über eine Blende in der zweiten Ventilstellung reduziert werden.

Generell ist es bevorzugt, wenn die Ventilanordnung ein eigenes Ventil ist, das in örtlicher Nähe zu der Pumpenanordnung angeordnet wird, also außerhalb der Reibkupplung.

In einer alternativen Ausführungsform beinhaltet die Umschaltanordnung eine Ventilanordnung, die einen mit einem Kolben des Fluidaktuators gekoppelten Schieber aufweist.

Bei dieser Ausführungsform kann der Volumenstrom zu der Kühleinrichtung reduziert werden, wenn der Fluidaktuator bzw. dessen Kolben einen Schwellenweg überschreitet.

Bei dieser Ausführungsform ist es ferner vorteilhaft, wenn die Umschaltanordnung in die Reibkupplung integriert ist.

In einer Variante kann ein solcher Schieber beispielsweise im Bereich eines Lamellenträgers vorgesehen werden.

Der Kühlvolumenstrom wird bei derartigen Reibkupplungen generell von radial innen nach radial außen geführt. Das Kühlfluid wird dabei durch Öffnungen in den Lamellenträgern einer solchen Reibkupplung hindurchgeführt.

Eine Ausführungsform eines solchen Schiebers kann dabei beispielsweise koaxial zu einem solchen Lamellenträger angeordnet werden, insbesondere koaxial zu dem Innenlamellenträger, um dann in Abhängigkeit von dem Betätigungsweg des Kolbens das Einströmen von Kühlfluid in die Reibkupplung zu reduzieren.

In einer alternativen Ausführungsform kann ein derartiger Schieber auch in eine Nabe integriert werden, die beispielsweise gehäusefest ausgebildet sein kann und über die Fluid zur Betätigung der Reibkupplung und/oder zur Kühlung der Reibkupplung zugeführt wird.

Insbesondere kann ein derartiger Schieber in einen radial vorspringenden Steg einer solchen Nabe integriert werden.

In beiden Fällen lässt sich ein solcher Schieber auf konstruktiv einfache Weise mit dem Kolben des Fluidaktuators koppeln, beispielsweise starr verbinden.

Insgesamt ist es vorteilhaft, wenn die Ventilanordnung ein Wegeventil, ein Druckreduzierungsventil oder ein den Durchfluss anhand des Druckes steuerndes Ventil aufweist.

Insbesondere Wegeventile können dabei auch bei geringen Reinheitsanforderungen bei der Montage der Reibkupplung verwendet werden.

Ein Druckreduzierungsventil kann jedoch in ähnlicher Weise in der Umschaltanordnung verwendet werden.

Gemäß der Erfindung weist die Ventilanordnung eine druckgesteuerte mechanische Arretiereinrichtung auf. Mittels einer solchen Arretiereinrichtung ist es möglich, die Ventileinrichtung, die in diesem Fall insbesondere als Wegeventil ausgebildet ist, in einer Zwischenstellung zu halten, bei der ein Kühlvolumenstrom eingerichtet wird, wobei über die Arretiereinrichtung diese Ventilstellung auch dann gehalten werden kann, wenn der Druck einen bestimmten Schwellenwert unterschreitet. Hierdurch ist eine Nachkühlfunktion der Reibkupplung realisierbar, also dann, wenn beispielsweise zum Zwecke eines Gangwechsels in schneller Folge hintereinander eine Öffnung der Reibkupplung und ein anschließendes Schließen der Reibkupplung erforderlich waren.

In einer vorteilhaften Ausgestaltung betrifft die vorliegende Erfindung folglich die Ansteuerung einer nassen Kupplung für ein Kraftfahrzeug. Die Ansteuerung des Fluidaktuators sowie der Kühleinrichtung kann mittels eines einzigen Aktuators (mittels eines Elektromotors) erfolgen. Die nasse Reibkupplung kann durch einen Fluiddruck gesteuert sein, den eine Pumpenanordnung (zum Beispiel eine Gerotorpumpe etc.) in Kombination mit dem Elektromotor zur Verfügung stellt. Ferner kann die Kupplung mit Kühlöl versorgt werden, das von derselben Pumpenanordnung über hydraulische Elemente aus dem Hydraulikkreis abgezweigt wird. In manchen Varianten kann ein Rückwärtsdrehen der Pumpe zur Hauptversorgung des Kühlölzweigs verwendet werden. Zur Erhöhung des Kühlölvolumenstroms kann eine Saugstrahlpumpe verwendet werden. Anstelle einer einzelnen Pumpe kann an den Elektromotor eine zweite Pumpe angeschlossen werden, die ausschließlich den Kühlstrom liefert.

Gegenüber Trockenkupplungen wird durch die nasse Reibkupplung eine Reihe von Vorteilen erzielt, insbesondere hinsichtlich Gewicht, Massenträgheitsmoment, Ansteuerbarkeit, Wärmeabfuhr etc.

Insgesamt ergibt sich eine kosten-, package- und gewichtsgünstige Aktuierung für den Öldruck zur Kupplungsbetätigung und den Kühlölvolumenstrom zur Kupplungskühlung, mit einer geringen Anzahl an Bauteilen.

Obgleich die vorliegende Erfindung bevorzugt in Verbindung mit einer "Normally-closed"-Reibkupplung verwendet wird, lassen sich die verschiedenen Lösungen auch auf eine "Normally-open"-Kupplung anwenden. Bei Kombination mit einer Normallyopen-Reibkupplung ist es vorteilhaft, wenn man bei offener Kupplung nachkühlen kann, jedoch auch zum Synchronisieren den Kühlölvolumenstrom ganz abschalten kann. Da das volle Moment in diesem Fall bei hohen Betätigungsdrücken erreicht wird, kann bei hohen Drücken eine weitere Umschaltstellung vorgesehen werden, die den Kühlölvolumenstrom reduziert, wenn die Kupplung geschlossen ist.

Mit anderen Worten könnte man bei einer solchen Variante auch vorsehen, dass eine Reduzierung des Kühlölvolumenstromes auch erfolgt, wenn der Betätigungsdruck in dem ersten Zweig einen weiteren Schwellendruck (kleinen Druck) unterschreitet und/oder der Fluidaktuator einen weiteren (kleineren) Schwellenweg unterschreitet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 : eine schematische Darstellung einer ersten Ausführungsform einer erfindungsgemäßen Kupplungsanordnung;
Fig. 1a : eine alternative Ausführungsform einer Ventilanordnung für die Kupplungsanordnung der Figur 1 ;
Fig. 1b : eine Alternative Ausführungsform einer Ventilanordnung für die Kupplungsanordnung der Figur 1 ;
Fig. 2 : eine schematische Darstellung eines Antriebsstranges eines Kraftfahrzeuges mit einer Reibkupplung, die Bestandteil einer erfindungsgemäßen Kupplungsanordnung darstellen kann;
Fig. 3 : ein Diagramm von Betätigungsdruck und Kupplungsmoment über dem Kupplungsweg sowie ein Diagramm von Kühlölvolumenstrom über der Drehzahl der Pumpenanordnung;
Fig. 4 : eine schematische Darstellung einer weiteren Ausführungsform einer erfindungsgemäßen Kupplungsanordnung;
Fig. 5 : eine schematische Darstellung einer weiteren Ausführungsform einer erfindungsgemäßen Kupplungsanordnung;
Fig. 6 : eine schematische Darstellung einer weiteren Ausführungsform einer erfindungsgemäßen Kupplungsanordnung;
Fig. 7 : eine schematische Darstellung einer weiteren Ausführungsform einer erfindungsgemäßen Kupplungsanordnung;
Fig. 8 : eine Detailansicht einer Reibkupplung mit einer integrierten Umschaltanordnung in Form eines Schiebers;
Fig. 9: eine der Figur 8 vergleichbare Darstellung mit einer weiteren Ausführungsform einer Umschaltanordnung in Form eines Schiebers.

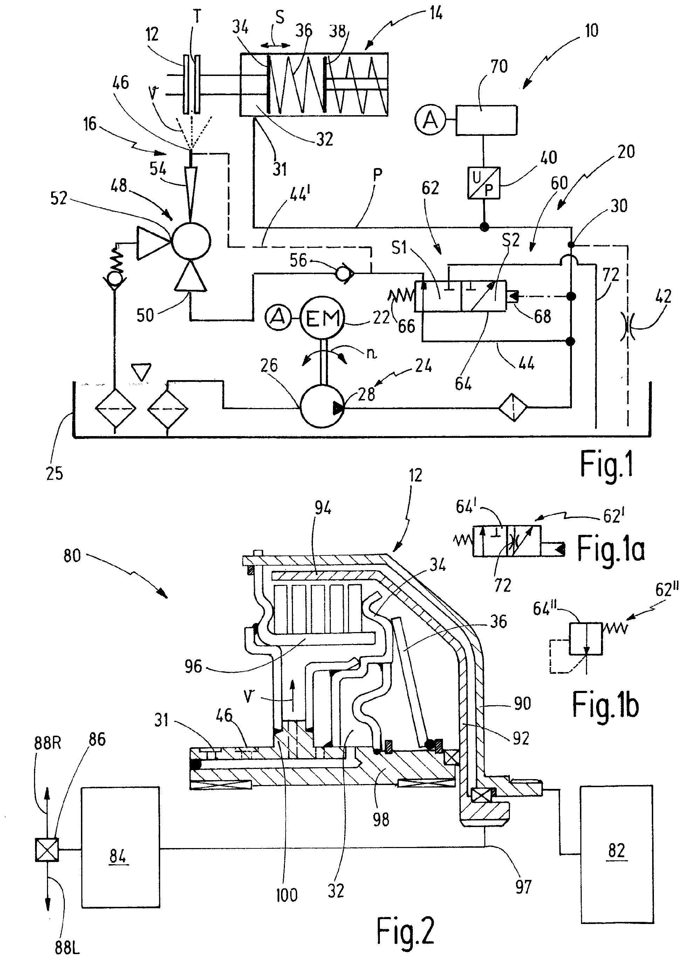

In Figur 1 ist in schematischer Form eine Kupplungsanordnung für einen Kraftfahrzeug-Antriebsstrang schematisch dargestellt und generell mit 10 bezeichnet.

Die Kupplungsanordnung 10 beinhaltet eine nasslaufende Reibkupplung 12 in Form einer Lamellenkupplung, einen Fluidaktuator 14 in Form eines einfach wirkenden Hydraulikzylinders zur Betätigung der Reibkupplung 12 sowie eine Kühleinrichtung 16 zur Kühlung der Reibkupplung 12 durch Zuführen von Kühlöl.

Die Kupplungsanordnung 10 beinhaltet ferner eine Fluidversorgungseinrichtung 20. Die Fluidversorgungseinrichtung 20 weist einen Elektromotor 22 auf, der eine Pumpenanordnung 24 antreibt, und zwar mit einer Drehzahl n. Die Pumpenanordnung 24 beinhaltet in der Ausführungsform der Figur 1 eine einzelne unidirektionale Pumpe, die einen Sauganschluss 26 aufweist, der mit einem Tank bzw. Reservoir 25 verbunden ist. Die Pumpe weist ferner einen Druckanschluss 28 auf, über den Fluid für den Fluidaktuator 14 und die Kühleinrichtung 16 bereitgestellt wird. Der Sauganschluss 26 und der Druckanschluss 28 können jeweils mit Fluidfiltern verbunden sein, die in Figur 1 dargestellt, jedoch nicht näher bezeichnet sind.

Die Fluidversorgungseinrichtung 20 weist ferner einen ersten Zweig 30 auf, der den Druckanschluss 28 direkt mit einem Betätigungsanschluss 31 des Fluidaktuators 14 verbindet. Unter einer direkten Verbindung wird vorliegend verstanden, dass in dem ersten Zweig 30 keine Proportional- oder Servoventile enthalten sind, die gewöhnlich zur Druckregelung verwendet werden. Der in dem ersten Zweig 30 bereitgestellte Druck P wird vielmehr durch Regeln der Drehzahl n des Elektromotors 22 eingestellt.

Der Betätigungsanschluss 31 des Fluidaktuators 14 ist mit einem Zylinderraum 32 verbunden, in dem ein Kolben 34 verschieblich gelagert ist. Der Kolben 34 ist mit der Reibkupplung 12 zu deren Betätigung gekoppelt. Dem Fluidaktuator 14 ist ferner eine Feder 36 zugeordnet, die den Kolben 34 in eine Position vorspannt, bei der die Reibkupplung 12 geschlossen ist ("normally closed"). Durch Befüllen des Zylinderraums 32 wird der Kolben 34 gegen die Feder 36 in eine Position überführt, bei der die Reibkupplung 12 geöffnet ist. Eine maximale Öffnungsposition des Kolbens 34 ist durch einen Anschlag 38 einstellbar, der in dem Fluidaktuator 14 angeordnet ist.

An den ersten Zweig 30 kann eine Druckmesseinrichtung 40 angeschlossen sein, die den Druck P in den ersten Zweig 30 und folglich in dem Zylinderraum 32 misst. Ferner kann der erste Zweig 30 über eine Blende 42 mit dem Tank 25 verbunden sein. Durch diese Maßnahme kann man das regelungstechnische Verhalten verbessern, mittels dessen der Druck P durch Regeln der Drehzahl n eingestellt wird. Die Fluidversorgungseinrichtung 20 beinhaltet ferner einen zweiten Zweig 44, der ebenfalls an den Druckanschluss 28 angeschlossen ist, also parallel zu dem ersten Zweig 30. Der zweite Zweig 44 ist mit einem Kühlanschluss 46 der Reibkupplung 12 verbunden und dient dazu, der Reibkupplung 12 einen Kühlfluid-Volumenstrom V zuzuführen. In den zweiten Zweig 44 kann eine Saugstrahlpumpe 48 integriert sein, wobei der pumpenseitige Teil des zweiten Zweiges 44 mit einem Treibanschluss 50 der Saugstrahlpumpe 48 verbunden ist. Ein Sauganschluss 52 der Saugstrahlpumpe 48 ist - über ein nicht näher bezeichnetes Rückschlagventil - mit dem Tank 25 verbunden. Ein reibkupplungsseitiger Diffusor 54 liefert den Volumenstrom V, der sich aus dem am Treibanschluss 50 bereitgestellten Volumenstrom und dem über dem Sauganschluss 52 angesaugten Volumenstrom zusammensetzt. Das Bereitstellen einer Saugstrahlpumpe 48 in dem zweiten Zweig 44 ist dabei optional. In einer alternativen Variante ist der zweite Zweig 44 direkt mit dem Kühlanschluss 46 verbunden, wie es in Figur 1 bei 44' angedeutet ist.

Der zweite Zweig 44 beinhaltet pumpenseitig ferner ein Rückschlagventil 56, das dafür sorgt, dass bei schnellem Öffnen der Reibkupplung 12 (zum Beispiel bei einem Rückwärtsdrehen der Pumpe) aus diesem Zweig keine Luft angesaugt wird.

Die Kupplungsanordnung 10 beinhaltet ferner eine Umschaltanordnung 60, die dazu ansteuerbar bzw. ausgebildet ist, um den Fluidvolumenstrom V von der Pumpenanordnung 24 zu der Kühleinrichtung 16 zu reduzieren, wenn der Betätigungsdruck P in dem ersten Zweig 30 einen Schwellendruck überschreitet.

Zu diesem Zweck beinhaltet die Umschaltanordnung 60 eine Ventilanordnung 62, die vorliegend ein 3/2-Wegeventil 64 beinhaltet. Das Ventil 64 ist mittels einer Feder 66 in eine erste Position vorgespannt, bei der ein ungehinderter Durchfluss von der Pumpenanordnung 24 hin zu dem Kühlanschluss 46 der Reibkupplung 12 eingerichtet ist.

In dieser ersten Position ist ein dritter Anschluss des Ventils 64 mit dem Reservoir verbunden.

Das Ventil 64 weist ferner einen Druckbetätigungsanschluss 68 auf. Der Druckbetätigungsanschluss 68 ist mit dem ersten Zweig 30 verbunden, so dass das Ventil bei Erreichen eines Druckes P, der einen Schwellendruck überschreitet, in eine zweite Position versetzt wird, und zwar gegen die Vorspannkraft der Feder 66. In der zweiten Position ist der pumpenseitige Anschluss des Ventils 64 mit dem Tank 25 verbunden, so dass kein Fluid mehr hin zu dem Kühlanschluss 46 geleitet wird. Die hierzu verwendete Rückführleitung 72 kann gegebenenfalls eine Blende beinhalten, was in Figur 1 jedoch nicht dargestellt ist.

Bei der obigen Ausführungsform schaltet das Ventil 64 schlagartig bei Überschreiten des Schwellendrucks von einem hohen Kühlvolumenstrom V auf einen Kühlvolumenstrom von Null um. Das Ventil kann jedoch auch so gestaltet sein, dass das Ventil und damit der Kühlölvolumenstrom anhand des Betätigungsdruckes P kontinuierlich von der Position 1 (voller Durchlass im Ventil zum Kühlanschluss 46 hin) in die Position 2 (vollständige Sperrung des Durchganges zu dem Kühlanschluss 46 hin) übergehen kann. Der Schwellendruck, ab dem das Ventil 64 umschaltet, ist so gewählt, dass er größer ist als ein Schleifpunkt-Betätigungsdruck, bei dem die Reibkupplung ihren Schleifpunkt hat. Hierdurch wird gewährleistet, dass ein Abschalten des Kühlvolumenstromes bei einem Öffnungsvorgang der Reibkupplung erst dann erfolgt, wenn gewährleistet ist, dass während des Schleifpunktes (Kisspoint) Kühlfluid (insbesondere Kühlöl) zur Kühlung bereitgestellt werden konnte.

Das Umschalten kann beispielsweise erst bei vollständig geöffneter Kupplung erfolgen und/oder dann, wenn sich der Kolben 34 an dem Anschlag 38 befindet. Hierbei kann es auch bevorzugt sein, wenn man dann den Druck um einen bestimmten Betrag bis zum Umschalten des Ventils weiter erhöhen muss. Hierdurch kann sichergestellt werden, dass im Bereich des Schleifpunktes immer zuverlässig, über alle Systemtoleranzen hinweg, Kühlfluid vorhanden ist.

Das Unterbrechen des Kühlfluidvolumenstromes ist deswegen bevorzugt, um bei geöffneter Kupplung das Schleppmoment zu reduzieren. Dies kann in einem nachgeschalteten Getriebe Synchronisierungsvorgänge bei Gangwechsel erleichtern und damit die Schaltkräfte für den Fahrer beim Wechseln der Gänge reduzieren. Der Schaltvorgang insgesamt kann somit komfortabler gestaltet werden.

Das Regeln des Druckes P kann über eine Steuereinrichtung 70 erfolgen, die mit dem Sensor 40 und dem Motor 22 verbunden ist.

In Figur 1 a ist dargestellt, dass das dort gezeigte alternative Ventil 64' in der zweiten Position mittels einer Blende 76 einen kleinen Volumenstrom hin zu dem Kühlanschluss durchlässt.

In Figur 1b ist eine alternative Ausführungsform einer Ventilanordnung 62" gezeigt, bei der die obigen Funktionen durch ein Druckreduzierventil 64" erzielt werden.

Figur 2 zeigt in schematischer Form einen Antriebsstrang 80 für ein Kraftfahrzeug. Der Antriebsstrang 80 beinhaltet einen Antriebsmotor 82, der durch einen Verbrennungsmotor gebildet sein kann oder durch eine Hybrid-Antriebseinheit. Ferner weist der Antriebsstrang 80 eine Reibkupplung 12 auf sowie ein Stufengetriebe 84, dessen Ausgang mit einem Differenzial 86 verbunden ist. Das Differenzial 86 verteilt Antriebsleistung auf angetriebene Räder 88L, 88R.

Die Reibkupplung 12 weist ein Eingangsglied 90 auf, das mit dem Antriebsmotor 12 verbunden ist. Ferner weist die Reibkupplung 12 ein Ausgangsglied 92 auf, das mit einer Eingangswelle des Stufengetriebes 84 verbunden ist. Das Stufengetriebe 84 ist vorzugsweise als Vorgelegegetriebe mit Radsätzen für jeweilige Gangstufen und Synchron-Schaltkupplungen ausgestattet.

Die Reibkupplung 12 ist als nasslaufende Lamellenkupplung ausgebildet, wobei das Ausgangsglied 92 mit einem Außenlamellenträger 94 verbunden ist. Ein Innenlamellenträger 96 ist in Drehrichtung starr mit dem Eingangsglied 90 gekoppelt.

Eine Längsachse der Reibkupplung 12 ist bei 97 gezeigt. Eine Nabe 98 erstreckt sich von der dem Antriebsmotor 12 entgegengesetzten Seite in die Reibkupplung 12 hinein, wobei die Nabe 98 vorzugsweise drehbar in Bezug auf ein Gehäuse gelagert ist. Ferner kann eine Getriebeeingangswelle drehbar in Bezug auf die Nabe 98 im Inneren der Nabe 98 gelagert sein.

Die Nabe 98 weist einen radial hervortretenden Steg 100 auf, der starr mit dem Eingangsglied 90 verbunden ist. In Betrieb dreht sich folglich die Nabe 98 mit dem Eingangsglied 90.

An dem Außenumfang der Nabe ist ein Kolben 34 axial verschieblich gelagert. Über geeignete Dichtungen wird zudem ein Zylinderraum 32 gebildet. Der Kolben 34 ist mittels einer schematisch angedeuteten Feder 36 so vorgespannt, dass mit den Lamellenträgern 94, 96 verbundene Lamellen im Normalfall aneinander angedrückt werden, um die Reibkupplung 12 zu schließen

Die Nabe 98 weist einen Betätigungsanschluss 31 sowie einen Kühlanschluss 46 auf. Diese Anschlüsse können über eine Drehdurchführung mit einem gehäusefesten Abschnitt der Kupplungsanordnung 10 verbunden sein. Über den Betätigungsanschluss 31 wird Fluid in den Zylinderraum 32 geführt, um den Kolben 34 von dem Lamellenpaket wegzudrücken, gegen die Kraft der Feder 36, um die Reibkupplung 12 zu öffnen.

Der Kühlanschluss 46 kann mit einem zu dem Zylinderraum 32 benachbarten Raum verbunden sein, wie es durch gestrichelte Linien angedeutet ist, wobei der benachbarte Raum als Druckausgleichsraum dient, um ein Öffnen der Reibkupplung 12 aufgrund von Zentrifugalkräften zu vermeiden.

Ferner ist der Kühlanschluss 46 über eine radiale Durchbrechung in dem Radialsteg 100 mit einem Raum innerhalb der Kupplung 12 verbunden, über den der Volumenstrom V auf den Innenumfang des Innenlamellenträgers 96 geführt werden kann, wobei der Innenlamellenträger nicht näher dargestellte Radialöffnungen aufweist, über die der Volumenstrom V in den Bereich zwischen den Lamellen geführt werden kann.

zeigt in schematischer Form Diagramme des Betätigungsdruckes P, eines sich in der Reibkupplung 12 hieraus entwickelnden Drehmomentes T sowie des Kühlvolumenstromes V über dem Weg s des Kolbens bzw. der Drehzahl n des Elektromotors 22.

Das obere Diagramm geht dabei auf der linken Seite von einem Zustand aus, bei dem die Reibkupplung 12 geschlossen ist, so dass ein hohes Drehmoment T von der Reibkupplung 12 übertragen werden kann. Der Druck P ist zunächst 0. Auch der Volumenstrom V ist bei diesem Ausgangszustand in der Regel 0. Bei geschlossener Kupplung kann der Elektromotor 22 in der Regel abgeschaltet werden, da ein Kühlen der Kupplung hierbei in der Regel nicht erforderlich ist.

Zum Öffnen der Kupplung 12 wird dann der Elektromotor 22 angetrieben, so dass sich die Drehzahl erhöht. Hierdurch steigt der Druck P an. Gleichzeitig hiermit nimmt das von der Kupplung 12 übertragbare Moment T ab.

Bei einem Druck P_{KP} ist der sogenannte Schleifpunkt KP (Kisspoint) erreicht. Ab diesem Zeitpunkt erhöht sich der Betätigungsdruck P mit einer geringeren Rate.

Sobald der Betätigungsdruck P einen Schwellendruck Psw erreicht hat, der einem Schwellenweg Ssw entspricht, schaltet die Umschaltanordnung 60 um, so dass der Volumenstrom V, der sich zunächst bis zum Schleifpunkt KP erhöht hat und dann annähernd konstant geblieben ist, schlagartig abfällt.

Der Weg ssw kann dabei einem Anschlagweg s_{A} entsprechen, bei dem der Kolben 34 an dem Anschlag 38 auftrifft.

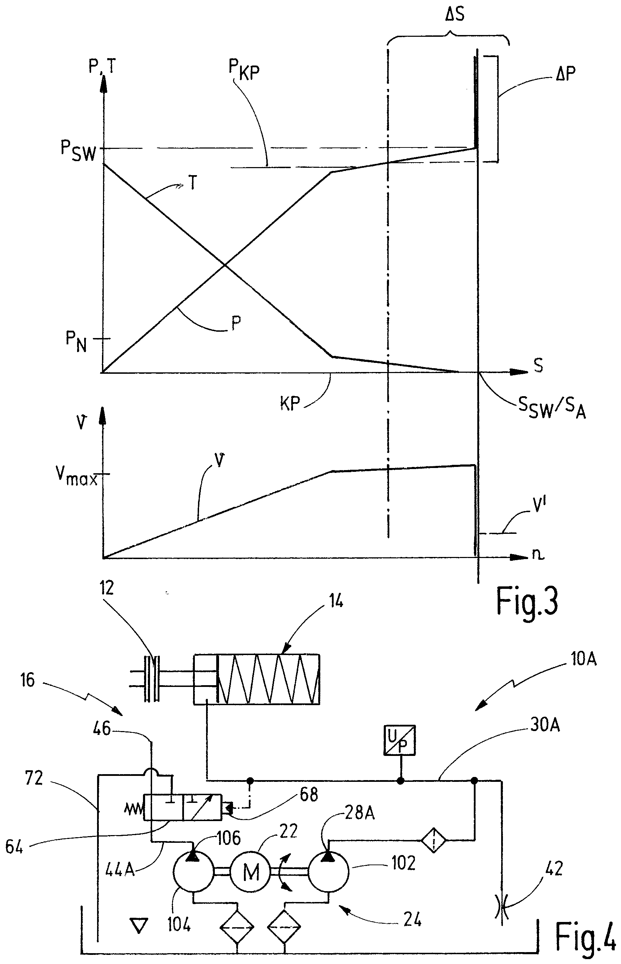

In Figur 3 ist bei ΔP gezeigt, dass der Druck gegebenenfalls ausgehend von dem Schwellenwert P_{SW} in einer Variante noch weiter erhöht werden muss, um die Umschaltanordnung umzuschalten.

Bei ΔS ist der Wegbereich gezeigt, innerhalb dessen die Umschaltanordnung umschalten könnte. Der kleinste Wert von Δs ist dabei in jedem Fall größer als der Wegpunkt KP, bei dem der Schleifpunkt der Reibkupplung liegt.

In Figur 3 ist bei V' ferner schematisch angedeutet, dass die Umschaltanordnung den Kühlölvolumenstrom V entweder auf 0 reduzieren kann oder auf einem kleinen Wert belassen kann (beispielsweise mittels der Blende 76 in Figur 1a), wodurch ein Volumenstrom V' eingestellt wird.

Die Reibkupplung 12 wird in dem Antriebsstrang 18 in der Regel dann geöffnet, wenn in dem Stufengetriebe 84 Gangwechsel durchzuführen sind.

Nach vollzogenem Gangwechsel (das heißt Auslegen eines Quellganges und Einlegen eines Zielganges) wird die Reibkupplung 12 dann wieder geschlossen, wobei der Druck P wieder auf 0 absinkt. Um in diesem Zustand ein Nachkühlen bei geschlossener Kupplung zu erzielen, kann es vorteilhaft sein, den Druck zu diesem Zweck auf einem kleinen Wert P_{N} zu halten, der unterhalb einer Schwelle liegt, bei der die Kupplung aufgrund des entsprechend verringerten Drehmomentes T durchzurutschen beginnen könnte. Der Druck P_{N} ist folglich vorzugsweise kleiner als der Druck, der einem Moment T entspricht, das aktuell zur Übertragung von Antriebsleistung benötigt wird, ohne dass die Reibkupplung 12 durchrutscht.

Eine Reserve kann hierbei durch die Kraft der Feder 36 realisiert werden, so dass der Druck P auf den Wert P_{N} aufgebaut werden kann, um die Kupplung nachzukühlen, ohne dass die Kupplung 12 durchrutscht.

Nachfolgend werden weitere Ausführungsformen der Erfindung beschrieben, die hinsichtlich Aufbau und Funktionsweise generell der oben beschriebenen Ausführungsform entsprechen. Gleiche Elemente sind daher durch gleiche Bezugszeichen gekennzeichnet. Im Folgenden werden im Wesentlichen die Unterschiede erläutert.

In Figur 4 ist eine Kupplungsanordnung 10A gezeigt, bei der die Pumpenanordnung 24 eine Betätigungspumpe 102 sowie eine Kühlpumpe 104 aufweist. Die beiden Pumpen 102, 104 sind beide an den Elektromotor 22 angeschlossen und drehen sich gemeinsam mit diesem. Ein Druckanschluss 28A der Betätigungspumpe 102 ist mit dem ersten Zweig 30A verbunden. Ein Druckanschluss 106 der Kühlpumpe 104 ist mit dem zweiten Zweig 44A verbunden.

Die Pumpen 102, 104 können auf ihren jeweiligen Anwendungszweck optimiert werden. So kann die Betätigungspumpe 102 dazu ausgelegt sein, hohe Drücke in dem ersten Zweig 30A einzurichten. Andererseits kann die Kühlpumpe 104 dazu eingerichtet sein, hohe Volumenströme zu liefern. Figur 4 zeigt den zweiten Zweig 44A ohne Saugstrahlpumpe. In diesen kann jedoch, wie bei der Ausführungsform der Figur 1 , eine Saugstrahlpumpe integriert werden. Das Ventil 64 entspricht jenem der Figur 1 . Auch die anderen oben beschriebenen Ventile können in dieser Ausführungsform verwendet werden.

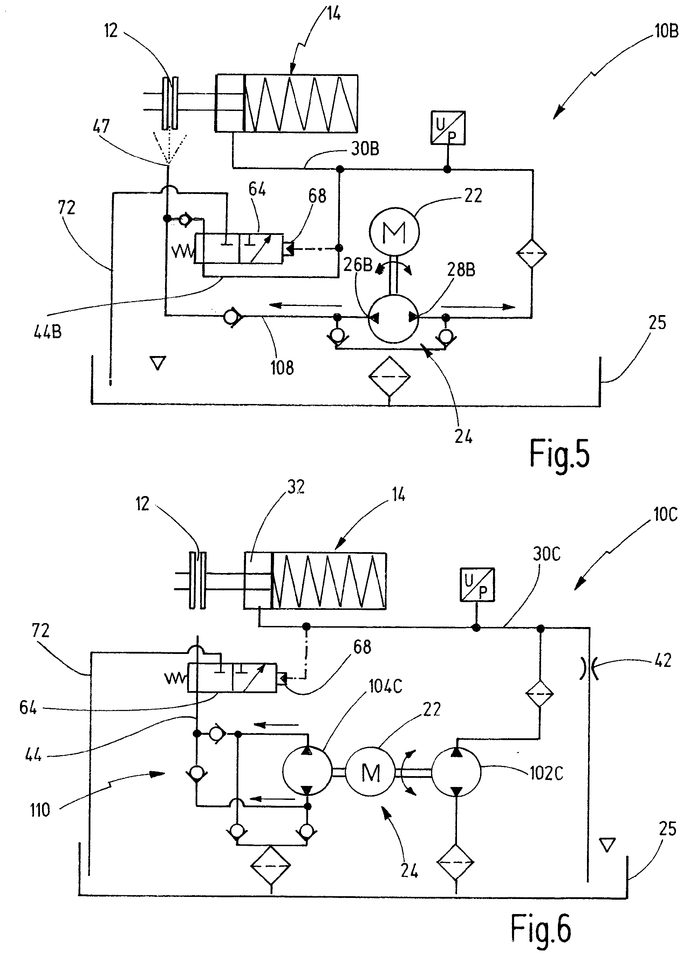

Figur 5 zeigt eine weitere Kupplungsanordnung 10B, die hinsichtlich Aufbau und Funktionsweise generell der Kupplungsanordnung 10 der Figur 1 entspricht. Bei dieser Ausführungsform ist die einzelne Pumpe der Pumpenanordnung 24 als bidirektionale Pumpe ausgebildet, wobei ein Pumpenanschluss 28B mit dem ersten Zweig 30B verbunden ist. Ein zweiter Pumpenanschluss 26B ist mit einer Kühlleitung 108 verbunden, die mit dem Kühlanschluss 47 direkt verbunden ist. Um die unterschiedlichen Drehrichtungen zu ermöglichen, sind die Pumpenanschlüsse 26B, 28B über jeweilige Rückschlagventile mit dem Tank 25 verbunden. Ferner ist der Pumpenanschluss 26B über ein Rückschlagventil mit dem Kühlanschluss 47 verbunden. In dem Bereich zwischen diesem Rückschlagventil und dem Kühlanschluss 47 ist der zweite Zweig 44B an den Kühlanschluss 47 angeschlossen. Dies kann wiederum über ein Rückschlagventil erfolgen.

In der ersten Drehrichtung, bei der ein Volumenstrom über den Pumpenanschluss 28B bereitgestellt wird, wird ein Teil des Volumenstromes folglich in den zweiten Zweig 44B abgezweigt und dem Kühlanschluss 47 zugeleitet. Erst beim Erreichen eines Schwellendruckes Psw wird die Zufuhr von Kühlfluid zu dem Kühlanschluss 47 über den zweiten Zweig 44B unterbunden, wie bei der Ausführungsform der Figur 1 . Das Rückschlagventil in der Kühlleitung 108 verhindert dabei einen Kurzschluss der Pumpenanordnung 24.

In der entgegengesetzten Drehrichtung, bei der ein Volumenstrom über den Pumpenanschluss 26B bereitgestellt wird, wird folglich in dem ersten Zweig 30B kein Druck aufgebaut, so dass die Reibkupplung 12 geschlossen ist. In diesem Zustand kann über die Kühlleitung 108 ein Volumenstrom an Kühlfluid an den Kühlanschluss 47 bereitgestellt werden, um die Kupplung beispielsweise nach einem Gangwechsel nachzukühlen.

In Figur 6 ist eine weitere Ausführungsform gezeigt, die eine weitere Ausführungsform einer Kühlanordnung 10C, die eine Art Kombination der Ausführungsformen 10A und 10B der Figuren 4 und 5 darstellt.

Hierbei weist die Pumpenanordnung 24 zwei Pumpen auf, nämlich eine Betätigungspumpe 102C und eine Kühlpumpe 104C. Die Pumpen sind bei dieser Ausführungsform als bidirektionale Pumpen ausgebildet. In dem ersten Zweig 30C kann durch Umkehren der Drehrichtung das Entleeren des Zylinderraumes 32 schneller erfolgen, da das darin enthaltene Fluid über die Betätigungspumpe 102C bei umgekehrter Drehrichtung abgesaugt werden kann.

Der Kühlpumpe 104C ist eine Rückschlagventilanordnung 110 zugeordnet, die dafür sorgt, dass unabhängig von der Drehrichtung der Kühlpumpe 104C ein Volumenstrom in dem zweiten Zweig 44 bereitgestellt wird. In dem zweiten Zweig 44 ist wiederum eine Umschaltanordnung 60 in Form eines 3/2-Wegeventils 64 angeordnet, dessen Druckbetätigungsanschluss 68 mit dem ersten Zweig 30C verbunden ist.

Bei dieser Variante ist es auch denkbar, einen der zwei Anschlüsse der Kühlpumpe 104C mit einer separaten Kühlleitung 108 zu verbinden, wie bei der Ausführungsform der Figur 5, um ein Nachkühlen zu ermöglichen.

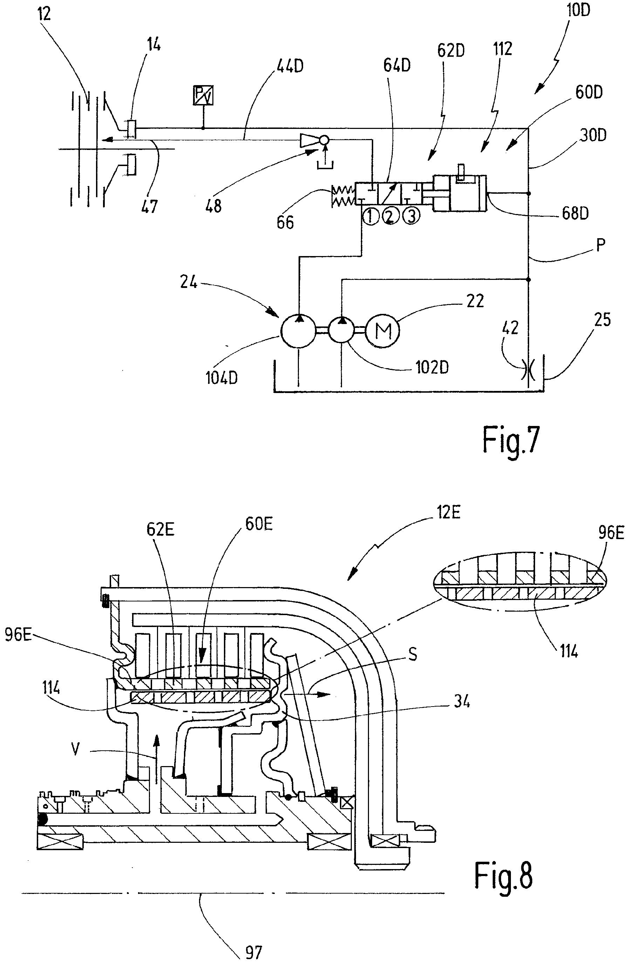

In Figur 7 ist eine weitere Ausführungsform einer Kühlanordnung 10D gezeigt, die generell der Ausführungsform der Figur 4 entspricht. Auch hier beinhaltet die Pumpenanordnung zwei Pumpen, eine Betätigungspumpe 102D und eine Kühlpumpe 104D.

In dem zweiten Zweig 44D ist bei der vorliegenden Variante wiederum eine Saugstrahlpumpe 48 angeordnet.

Anstelle des 3/2-Wegeventils der vorherigen Ausführungsformen beinhaltet die Umschaltanordnung 60D vorliegend eine Ventilanordnung 62D, die ein 2/3-Wegeventil beinhaltet. In einer mittleren Position (Nr. 2 in Figur 7) ist dabei ein Durchfluss von der Kühlpumpe 104D zu der Saugstrahlpumpe 48 und folglich hin zu einem Kühlanschluss 47 der Reibkupplung 12 eingerichtet. In den beiden äußeren Positionen (Nr. 1 und Nr. 3) ist dieser Durchfluss hingegen unterbunden.

Das Wegeventil 64D wird ebenfalls über einen Druckbetätigungsanschluss 68D betätigt, wobei zwischen den Druckbetätigungsanschluss 68D und einen Ventilschieber des Wegeventils 64D eine Arretiereinrichtung 112 angeordnet ist. Die Arretiereinrichtung 112 arbeitet nach dem Prinzip einer Kugelschreibermechanik und beinhaltet folglich vorzugsweise eine Art Herzkurve.

Die Funktion der Arretiereinrichtung 112 ist folgende: Bei ansteigendem Druck P wird das Ventil 64D gegen die Kraft einer Feder 66 zunächst von der Position Nr. 1 in die Position Nr. 2 bewegt. Dies erfolgt bei einem sehr niedrigen Druck, der beispielsweise im Bereich des Nachkühldrucks P_{N} sein kann. In der Position Nr. 2 liefert die Kühlpumpe 104D Kühlfluid an die Reibkupplung 12. Sobald der Betätigungsdruck P in dem ersten Zweig 30D eine Schwellendruck P_{SW} überschreitet, wird das Wegeventil 64D in die Position Nr. 3 versetzt, bei der der Kühlfluid-Volumenstrom zu der Reibkupplung 12 wiederum unterbrochen wird.

Die Arretiereinrichtung 112 hat bei Überfahren der Position Nr. 2 eine Rastierung eingerichtet, so dass bei einem Verringern des Druckes P in dem ersten Zweig 30D das Wegeventil 64D in der zweiten Position verbleibt, selbst wenn der Druck unter den Nachkühldruck P_{N} absinkt. Demzufolge kann die Reibkupplung 12 vollständig wieder geschlossen werden, da der Druck P auf Null absinken kann. Das Wegeventil 64D verbleibt aufgrund der Arretiereinrichtung 112 jedoch in der Position 2, so dass ein Nachkühlen erfolgen kann.

Ein Überführen des Wegeventils 64D aus der Position Nr. 2 zurück in die Position Nr. 1 kann beispielsweise erfolgen, indem nach dem Wirkprinzip eines Kugelschreibers der Druck P erneut angehoben wird, über einen Schwellenwert für die Position Nr. 2 hinaus und anschließend wieder abgesenkt wird.

Das Prinzip einer solchen Kugelschreibermechanik ist in dem Dokument DE 10 2011 113 278 beschrieben.

In den Ausführungsformen der vorstehenden Figuren beinhaltet die Umschaltanordnung jeweils ein Ventil, das gehäusefest in Bezug auf ein Gehäuse des Antriebsstranges, beispielsweise ein Kupplungs- oder Getriebegehäuse, angeordnet ist.

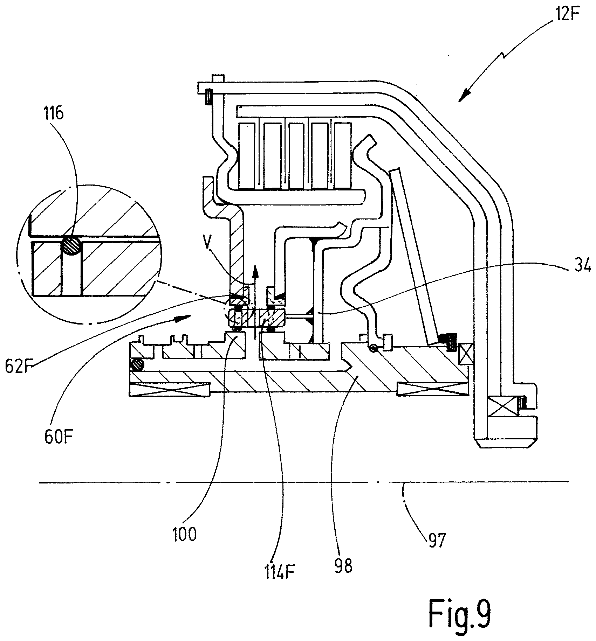

Es ist jedoch auch möglich, die Umschaltanordnung in die Reibkupplung zu integrieren. Die Figuren 8 und 9 zeigen zwei hierfür mögliche Lösungen.

Gemäß Figur 8 beinhaltet die Umschaltanordnung 60E eine Ventilanordnung 62E, die durch einen Schieber 114 gebildet ist, der koaxial zu dem Innenlamellenträger 96 der Reibkupplung 12E angeordnet ist. Der Schieber 114 ist radial innerhalb des Innenlamellenträgers 96 angeordnet und ist starr mit den Kolben 34 gekoppelt. In der in Figur 8 gezeigten Grundposition, bei der die Reibkupplung geschlossen ist, kann ein Kühlfluid-Volumenstrom V durch Öffnungen in dem Schieber 114 hindurch und durch Öffnungen in dem Lamellenträger 96E hindurch zu dem Lamellenpaket gelangen. Mit Öffnen der Kupplung wird der Kolben 34 bewegt, wie es durch den Doppelpfeil s angedeutet ist. Hierdurch kann beispielsweise in einer maximalen Auslenkungsposition (= S_{SW}) des Kolbens 34 eine axiale Relativposition zwischen Innenlamellenträger 96E und Schieber 114 eingerichtet werden, bei dem die darin enthaltenen Öffnungen nicht mehr radial miteinander ausgerichtet sind, so dass der Volumenstrom V hin zu dem Lamellenpaket verringert oder unterbrochen wird.

In Figur 9 ist eine vergleichbare Lösung dargestellt, bei der ein Schieber 114F in den Radialsteg 100 der Nabe 98 integriert ist. Der Schieber 114F ist wiederum mit dem Kolben 34 starr gekoppelt und lässt in einer Grundposition (in Figur 9 gezeigt) einen Fluidvolumenstrom V hin zu dem Lamellenpaket radial nach außen durch. Mit einem Versetzen des Kolbens 34 sperrt oder verringert der Schieber 114 F jedoch diesen Durchgang, so dass bei Überschreiten eines Schwellenweges S_{SW} der Fluidvolumenstrom hin zu der Lamellenanordnung und folglich hin zu der Kühleinrichtung reduziert wird. Der Schieber 114F kann gegen den Radialsteg 100 durch eine Dichtung 116 abgedichtet sein.

Die Schieber 114, 114F der Figuren 8 und 9 können als zylindrische Bauteile ausgebildet sein.

## Patentansprüche

1. Kupplungsanordnung (10), insbesondere für ein manuelles oder ein automatisiertes Kraftfahrzeug-Stufengetriebe (84), mit
- einer nasslaufenden Reibkupplung (12) zur Anordnung zwischen einem Antriebsmotor (82) und einem Stufengetriebe (84),
- einem Fluidaktuator (14) zur Betätigung der Reibkupplung (12),
- einer Kühleinrichtung (16) zur Fluidkühlung der Reibkupplung (12),
- einer Fluidversorgungseinrichtung (20), die einen Elektromotor (22) und eine von dem Elektromotor (22) angetriebene Pumpenanordnung (24) aufweist, wobei die Pumpenanordnung (24) über einen ersten Zweig (30) mit dem Fluidaktuator (14) verbunden ist und über einen zweiten Zweig (44) mit der Kühleinrichtung (16) verbunden ist,
wobei eine Umschaltanordnung (60) in dem zweiten Zweig (44) angeordnet ist und zur Betätigung in Abhängigkeit von einem Betätigungsdruck (P) mit dem ersten Zweig (30) der Fluidversorgungseinrichtung (20) verbunden ist, um einen Fluidvolumenstrom (V) von der Pumpenanordnung (24) zu der Kühleinrichtung (16) zu reduzieren, wenn der Betätigungsdruck (P) in dem ersten Zweig (30) einen Schwellendruck (P_{SW}) überschreitet und/oder der Fluidaktuator (14) einen Schwellenweg (S_{SW}) überschreitet, **dadurch gekennzeichnet, dass** die Pumpenanordnung (22) eine Betätigungspumpe (102) und eine Kühlpumpe (104) aufweist, wobei ein Pumpenanschluss (28A) der Betätigungspumpe (102) über den ersten Zweig (30) mit dem Fluidaktuator (14) verbunden ist und wobei ein Pumpenanschluss (106) der Kühlpumpe (104) über den zweiten Zweig (44) mit einem Kühlanschluss (46) der Reibkupplung (12) verbunden ist und dass die Umschaltanordnung (60) eine Ventilanordnung (62D) als 2/3 Wegeventil mit einer druckgesteuerte mechanische Arretiereinrichtung (112) aufweist.

2. Kupplungsanordnung nach Anspruch 1, **dadurch gekennzeichnet, dass** die Reibkupplung (12) in eine geschlossene Position vorgespannt ist.

3. Kupplungsanordnung nach Anspruch 1 oder 2, **dadurch gekennzeichnet, dass** der Schwellendruck (P_{SW}) größer ist als ein Schleifpunkt-Betätigungsdruck (P_{KP}), bei dem die Reibkupplung (12) ihren Schleifpunkt (KP) hat.

4. Kupplungsanordnung nach Anspruch 1, **dadurch gekennzeichnet, dass** die Betätigungspumpe (102C) und die Kühlpumpe (104C) bidirektional antreibbar sind, wobei ein erster und ein zweiter Pumpenanschluss der Kühlpumpe (104C) mit dem zweiten Zweig (44) über eine Rückschlagventilanordnung (110) verbunden sind, die so ausgebildet ist, dass in beiden Drehrichtungen der Kühlpumpe (104C) Fluid in den zweiten Zweig (44) geleitet wird.

5. Kupplungsanordnung nach einem der Ansprüche 1 - 4, **dadurch gekennzeichnet, dass** die Umschaltanordnung (60E; 60F) eine Ventilanordnung (62E; 62F) aufweist, die einen mit einem Kolben (34) des Fluidaktuators (14) gekoppelten Schieber (114E; 114F) aufweist.

6. Kupplungsanordnung nach einem der Ansprüche 1 - 5, **dadurch gekennzeichnet, dass** die Umschaltanordnung (60E; 60F) in die Reibkupplung (12) integriert ist.

7. Antriebsstrang (80) mit einem Antriebsmotor (82), mit einer Kupplungsanordnung (10), die eine einzelne Reibkupplung (12) mit einem Eingangsglied (90) aufweist, das mit dem Antriebsmotor (82) verbunden ist, und mit einem Stufengetriebe (84), dessen Eingang mit einem Ausgangsglied (92) der Reibkupplung (12) verbunden ist, **dadurch gekennzeichnet, dass** die Kupplungsanordnung eine Kupplungsanordnung (10) nach einem der Ansprüche 1 - 6 ist.

8. Verfahren zur Betätigung und zur Kühlung einer Kupplungsanordnung, insbesondere einer Kupplungsanordnung (10) nach einem der Ansprüche 1 - 7, wobei die Kupplungsanordnung (10) eine nasslaufende Reibkupplung (12) sowie eine Fluidversorgungseinrichtung (20) aufweist, die über einen ersten Zweig (30) mit einem Fluidaktuator (14) zur Betätigung der Reibkupplung (12) verbunden ist und die über einen zweiten Zweig (44) mit einer Kühleinrichtung (16) zur Fluidkühlung der Reibkupplung (12) verbunden ist, wobei die Fluidversorgungseinrichtung (20) dazu ausgebildet ist, in dem ersten Zweig (30) einen geregelten Betätigungsdruck (P) für den Fluidaktuator (14) einzustellen, wobei das Verfahren den Schritt beinhaltet, einen Fluidvolumenstrom (V) von der Fluidversorgungseinrichtung (20) zu der Kühleinrichtung (16) zu reduzieren, wenn der Betätigungsdruck (P) in dem ersten Zweig (30) einen Schwellendruck (P_{SW}) überschreitet und/oder der Fluidaktuator (14) einen Schwellenweg (S_{SW}) überschreitet.

## Claims

1. Coupling assembly (10), in particular for a manual or an automated motor vehicle multi-step transmission (84), having
- a wet-running friction clutch (12) for arranging between a drive engine (82) and a multi-step transmission (84),
- a fluid actuator (14) for actuating the friction clutch (12),
- a cooling device (16) for the fluid cooling of the friction clutch (12),
- a fluid supply device (20) which has an electric motor (22) and a pump assembly (24) which is driven by the electric motor (22), the pump assembly (24) being connected via a first branch (30) to the fluid actuator (14) and being connected via a second branch (44) to the cooling device (16),
wherein a switching assembly (60) is arranged in the second branch (44) and, for actuation in dependence on an actuating pressure (P), is connected to the first branch (30) of the fluid supply device (20) in order to reduce a fluid volumetric flow (V) from the pump assembly (24) to the cooling device (16) if the actuating pressure (P) in the first branch (30) exceeds a threshold pressure (P_{SW}) and/or the fluid actuator (14) undershoots a threshold travel (S_{SW}), **characterized in that** the pump assembly (22) has an actuating pump (102) and a cooling pump (104), wherein a pump connection (28A) of the actuating pump (102) is connected via the first branch (30) to the fluid actuator (14) and wherein a pump connection (106) of the cooling pump (104) is connected via the second branch (44) to a cooling connection (46) of the friction clutch (12), and **in that** the switching assembly (60) has a valve assembly (62D) as a 2/3-way valve with a pressure-controlled mechanical arresting device (112).

2. Coupling assembly according to Claim 1, **characterized in that** the friction clutch (12) is prestressed into a closed position.

3. Coupling assembly according to Claim 1 or 2, **characterized in that** the threshold pressure (P_{SW}) is greater than a biting point actuating pressure (P_{KP}), at which the friction clutch (12) has its biting point (KP).

4. Coupling assembly according to Claim 1, **characterized in that** the actuating pump (102C) and the cooling pump (104C) can be driven bidirectionally, wherein a first and a second pump connection of the cooling pump (104C) are connected to the second branch (44) via a non-return valve assembly (110) which is designed in such a way that fluid is channelled into the second branch (44) in both directions of rotation of the cooling pump (104C).

5. Coupling assembly according to one of Claims 1-4, **characterized in that** the switching assembly (60E; 60F) has a valve assembly (62E; 62F) which has a slide (114E; 114F) which is coupled to a piston (34) of the fluid actuator (14).

6. Coupling assembly according to one of Claims 1-5, **characterized in that** the switching assembly (60E; 60F) is integrated into the friction clutch (12).

7. Powertrain (80) having a drive engine (82), having a coupling assembly (10) which has an individual friction clutch (12) with an input member (90) which is connected to the drive engine (82), and having a multi-step transmission (84) whose input is connected to an output member (92) of the friction clutch (12), **characterized in that** the coupling assembly is a coupling assembly (10) according to one of Claims 1-6.

8. Method for actuating and for cooling a coupling assembly, in particular a coupling assembly (10) according to one of Claims 1-7, wherein the coupling assembly (10) has a wet-running friction clutch (12) and a fluid supply device (20) which is connected via a first branch (30) to a fluid actuator (14) for actuating the friction clutch (12) and which is connected via a second branch (44) to a cooling device (16) for the fluid cooling of the friction clutch (12), wherein the fluid supply device (20) is designed to set a controlled actuating pressure (P) for the fluid actuator (14) in the first branch (30), wherein the method comprises the step of reducing a fluid volumetric flow (V) from the fluid supply device (20) to the cooling device (16) if the actuating pressure (P) in the first branch (30) exceeds a threshold pressure (P_{SW}) and/or the fluid actuator (14) undershoots a threshold travel (S_{SW}).

## Revendications

1. Agencement d'embrayage (10), en particulier pour une transmission étagée (84) d'un véhicule automobile, manuelle ou automatisée, comprenant
- un embrayage à friction humide (12) destiné à être disposé entre un moteur d'entraînement (82) et une transmission étagée (84),
- un actionneur fluidique (14) destiné à actionner l'embrayage à friction (12),
- un dispositif de refroidissement (16) destiné au refroidissement du fluide de l'embrayage à friction (12),
- un dispositif d'alimentation en fluide (20), qui présente un moteur électrique (22) et un agencement de pompe (24) entraîné par le moteur électrique (22), l'agencement de pompe (24) étant connecté par le biais d'une première branche (30) à l'actionneur fluidique (14) et étant connecté par le biais d'une deuxième branche (44) au dispositif de refroidissement (16),
un agencement de commutation (60) étant disposé dans la deuxième branche (44) et étant connecté à la première branche (30) du dispositif d'alimentation en fluide (20) pour l'actionnement en fonction d'une pression d'actionnement (P), afin de réduire un débit volumique de fluide (V) allant de l'agencement de pompe (24) au dispositif de refroidissement (16) lorsque la pression d'actionnement (P) dans la première branche (30) dépasse une pression seuil (Psw) et/ou que l'actionneur fluidique (14) dépasse une course seuil (Ssw), **caractérisé en ce que** l'agencement de pompe (22) présente une pompe d'actionnement (102) et une pompe de refroidissement (104), un raccord de pompe (28) de la pompe d'actionnement (102) étant connecté à l'actionneur fluidique (14) par le biais de la première branche (30) et un raccord de pompe (106) de la pompe de refroidissement (104) étant connecté à un raccord de refroidissement (46) de l'embrayage à friction (12) par le biais de la deuxième branche (44), et **en ce que** l'agencement de commutation (60) comprend un agencement de soupape (62D) sous forme de soupape à 2/3 voies présentant un dispositif de blocage (112) mécanique commandé par pression.

2. Agencement d'embrayage selon la revendication 1, **caractérisé en ce que** l'embrayage à friction (12) est précontraint dans une position fermée.

3. Agencement d'embrayage selon la revendication 1 ou 2, **caractérisé en ce que** la pression seuil (P_{SW}) est supérieure à une pression d'actionnement (P_{KP}) de point de glissement à laquelle l'embrayage à friction (12) présente son point de glissement (KP).

4. Agencement d'embrayage selon la revendication 1, **caractérisé en ce que** la pompe d'actionnement (102C) et la pompe de refroidissement (104C) peuvent être entraînées de manière bidirectionnelle, un premier et un deuxième raccord de la pompe de refroidissement (104C) étant connectés à la deuxième branche (44) par le biais d'un agencement de soupape antiretour (110) qui est réalisé de telle sorte que, dans les deux sens de rotation de la pompe de refroidissement (104C), du fluide est guidé dans la deuxième branche (44).

5. Agencement d'embrayage selon l'une des revendications 1 à 4, **caractérisé en ce que** l'agencement de commutation (60E ; 60F) comprend un agencement de soupape (62E ; 62F) qui comprend un tiroir (114E ; 114F) accouplé à un piston (34) de l'actionneur fluidique (14).

6. Agencement d'embrayage selon l'une des revendications 1 à 5, **caractérisé en ce que** l'agencement de commutation (60E ; 60F) est intégré dans l'embrayage à friction (12).

7. Chaîne cinématique (80) comprenant un moteur d'entraînement (82), un agencement d'embrayage (10) qui présente un embrayage à friction (12) individuel comportant un organe d'entrée (90) qui est connecté au moteur d'entraînement (82), et une transmission étagée (84) dont l'entrée est connectée à un organe de sortie (92) de l'embrayage à friction (12), **caractérisée en ce que** l'agencement d'embrayage est un agencement d'embrayage (10) selon l'une des revendications 1 à 6.

8. Procédé d'actionnement et de refroidissement d'un agencement d'embrayage, en particulier d'un agencement d'embrayage (10) selon l'une des revendications 1 à 7, dans lequel l'agencement d'embrayage (10) présente un embrayage à friction humide (12) ainsi qu'un dispositif d'alimentation en fluide (20) qui est connecté par le biais d'une première branche (30) à un actionneur fluidique (14) destiné à actionner l'embrayage à friction (12) et est connecté par le biais d'une deuxième branche (44) à un dispositif de refroidissement (16) destiné au refroidissement du fluide de l'embrayage à friction (12), le dispositif d'alimentation en fluide (20) étant réalisé de manière à régler une pression d'actionnement régulée (P) pour l'actionneur fluidique (14) dans la première branche (30), le procédé comprenant l'étape consistant à réduire un débit volumique de fluide (V) allant du dispositif d'alimentation en fluide (20) au dispositif de refroidissement (16) lorsque la pression d'actionnement (P) dans la première branche (30) dépasse une pression seuil (P_{SW}) et/ou que l'actionneur fluidique (14) dépasse une course seuil (S_{SW}).
